# EUROPEAN PATENT APPLICATION

(11) **EP 2 030 590 A1**
(43) Date of publication of application: **04.03.2009**
(21) Application number: 08163247.3
(22) Date of filing: 29.08.2008
(51) Int. Cl.: A61C 13/10

(54) **A device for positioning artificial teeth**

(30) Priority: 03.09.2007 IT TO20070622
(71) Applicant: Major Prodotti Dentari S.P.A., 10024 Moncalieri (TO) (IT)
(72) Inventor: Preti, Giulio, 10024 Moncalieri (Torino) (IT); Gassino, Gianfranco, 10152 Torino (IT); Ceruti, Paola, 10137 Torino (IT); Rizzatti, Alessio, 14100 Asti (IT); Politi, Giorgio, 10135 Torino (IT); Gentile, Francesco, 10046 Poirino (Torino) (IT)
(74) Representative: Fioravanti, Corrado

(57) **Abstract**

The positioning device has two rows of seats, namely an upper row (13) and a lower row (12), for temporarily retaining artificial teeth (14, 15) to be positioned and mounted on prosthetic supports. The teeth are retained in a relationship of maximum intercuspidation, in such a way that they can be positioned and mounted in this condition on the mandibular and maxillary prosthetic supports.

## Description

The present invention generally relates to the field of dental prostheses, and more specifically to a device for facilitating the positioning and mounting of artificial teeth (or diatoric teeth) on dental prostheses.

Conventionally, dental prostheses on which artificial teeth are to be mounted are placed on an articulator, and the teeth are fixed temporarily, one at a time, to the corresponding prostheses by means of wax or resin. When the teeth have been fixed to the mandibular prosthesis, the dental technician arranges the individual teeth on the maxillary prosthesis. This is a particularly complicated and rather time-consuming operation, since the teeth have to be positioned along the crest lines of the edentulous arches, and the fit between the maxillary teeth and the mandibular teeth must be as perfect as possible in order to achieve an ideal occlusion condition. In other words, the aim is to arrange the teeth in a condition of maximum intercuspidation, with the correct contact between the occlusal surfaces of the corresponding teeth of the maxilla and the mandible.

Attempts have been made in the past to accelerate the positioning of artificial teeth by placing them in groups on prostheses. For example, Italian utility model No. 204422, in the name of the present applicant, proposes a plate which carries on its opposite faces corresponding sets of impressions for the occlusal parts of the lower and upper teeth, between which the plate is interposed. Although this plate saves a certain amount of time when compared with the conventional method, it does not ensure maximum intercuspidation, and therefore the dental technician is almost always obliged to modify the temporary tooth mounting position in order to achieve the ideal occlusion condition.

The object of the present invention is therefore to provide a solution which can meet the requirement of providing an excellent end result in terms of precision of mounting of the artificial teeth on the prostheses while also enabling the teeth to be positioned rapidly.

According to the present invention, the aforesaid object is achieved by means of a positioning device having the characteristics claimed in the appended claims.

A preferred and non-limiting embodiment of the invention will now be described; reference will be made to the attached drawings, in which:
Figure 1 is a schematic perspective view of a first embodiment of a positioner according to the invention;
Figure 2 is a schematic plan view of the positioner of Figure 1 which is holding artificial teeth to be positioned on a prosthesis;
Figure 3 is a side view taken in the direction of the arrow III of Figure 2; and
Figure 4 is a vertical sectional view showing two sets of teeth, upper and lower, placed on the positioner according to the invention between a maxillary prosthesis and a mandibular prosthesis.

With reference to the drawings, a positioning device according to the invention is indicated as a whole by the number 10. In its preferred embodiment, the positioner 10 has a body 11 made from plastics material, one side of which forms a plurality of cavities 12, 13, arranged in two parallel rows, which can serve as retaining seats for corresponding diatoric teeth 14, 15 which are to be positioned and mounted, respectively, on a lower, or mandibular, prosthetic support 16 and on an upper, or maxillary, prosthetic support 17.

The individual teeth 14, 15 are retained temporarily and weakly in the seats, using wax or resin for example. If the body 11 of the positioner is made from plastics material, the seats can also be designed in such a way that the insertion of the teeth requires a slight degree of force, so that the teeth are retained by a limited elastic deformation of the plastics body.

An important feature of the present invention is that the seats 12, 13 are positioned in an upper row and a lower row, and in such a way that the artificial teeth are retained and then mounted on the mandibular prosthesis 16 and the maxillary prosthesis 17 in a relationship of maximum intercuspidation, with the occlusal faces of the opposing teeth correctly positioned with respect to each other, in arrangements which are known to those skilled in the art and which do not, therefore, require detailed description herein.

The seats 12, 13 are formed to retain the teeth by their vestibular faces, and, in order to facilitate this retention, they are preferably shaped so as to match part of the impression of the vestibular face and, to a very small extent, the impression of a lateral part of the occlusal face of each tooth. The occlusal faces of the teeth are left uncovered, at least to a sufficient extent to enable each tooth to freely contact the opposing teeth of the opposite arch in the predetermined ideal occlusion condition.

In the example shown in the drawings, the positioner is designed to retain three upper teeth and three lower teeth. Clearly, more than three seats can be provided for each row of teeth, the possible number of seats being up to six or seven per row. The number 18 indicates a rod which projects from the body of the positioner and which serves as a handling means to enable the positioner to be gripped and orientated, as described below.

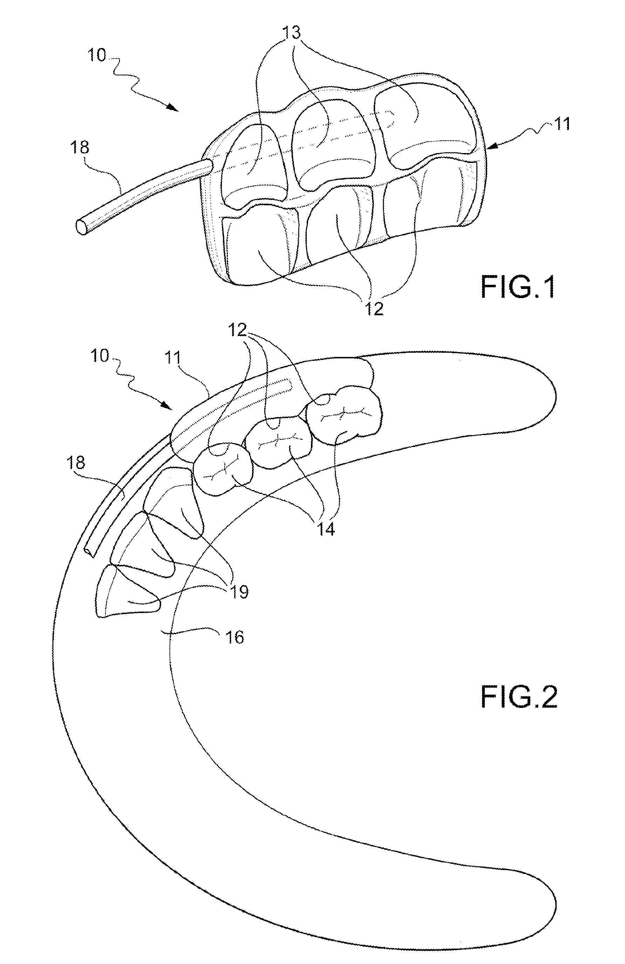

The procedure for mounting the teeth 14, 15 on the dental prostheses is as follows. The dental prostheses are initially fixed to an articulator of a conventional type, not shown in the drawings, which is set in the open position, and the artificial teeth are placed in the lower seats 12 and upper seats 13 of the positioner 10. Using the positioner, the lower teeth 12 are brought above the crest line of the mandibular prosthesis, and are fixed temporarily thereto by applying a certain quantity of melted wax. Figure 2 also shows other artificial teeth 19 which have been mounted previously.

It should be noted that the upper teeth 15 have already been retained in the positioner in the position of maximum intercuspidation with respect to the lower teeth 14, which have just been fixed to the mandibular prosthesis 16. At this point, the articulator is closed, thus bringing the maxillary prosthesis 17 towards the upper teeth 15. By means of the handling rod 18, the positioner is rotated on the mandibular prosthesis until the upper teeth are aligned with the crest of the maxillary prosthesis.

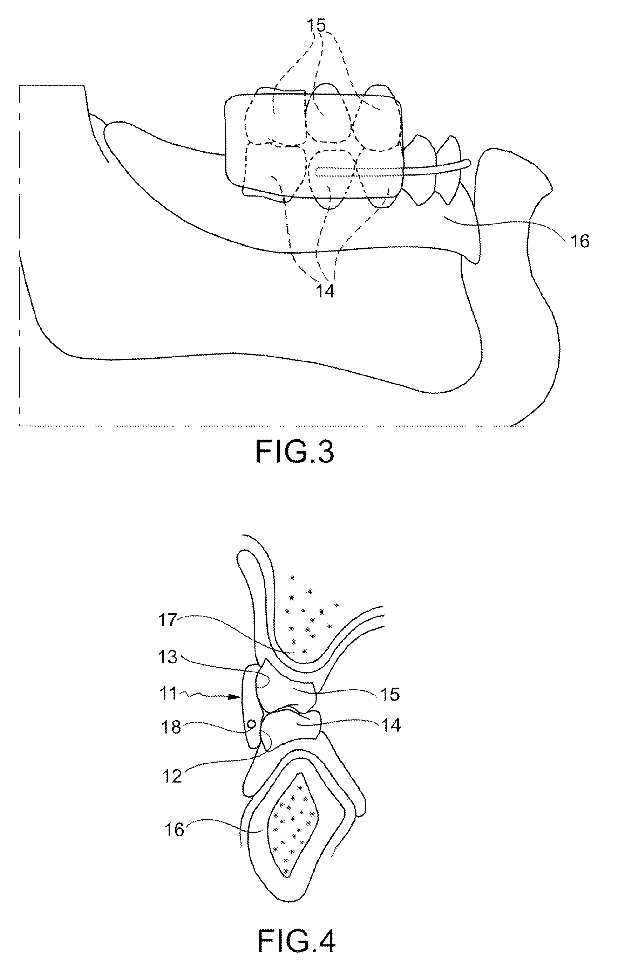

In the preferred embodiment shown in the drawings, the rod 18 projects longitudinally from the body of the positioner, extending in a direction substantially parallel to the rows of seats 12, 13, and is connected to the body 11 of the positioner at a point slightly nearer the lower edge of the latter, close to the seats 12 for the mandibular teeth (Figures 2 and 3). This configuration of the rod facilitates the precise manoeuvring of the positioner.

When the desired orientation has been achieved, the upper teeth are fixed to the maxillary prosthesis by the application of wax or another bonding material. The positioner can then be removed, leaving the two sets of teeth, upper and lower, fixed to the corresponding prostheses in the condition of maximum intercuspidation.

As shown in Figure 3, in the preferred embodiment the body of the positioner has a limited vertical dimension, so that it does not cover the whole of the vestibular faces of the artificial teeth fitted in its seats, but leaves the base or neck portions of the teeth uncovered. This facilitates the application of the wax which temporarily fixes the teeth to the prosthesis.

It should be understood that the invention is not limited to the embodiment described and illustrated herein, which is considered to be an exemplary embodiment of the positioner; in fact, the invention can be modified in respect of details of construction and operation, particularly as regards the number, shape and dimensions of the seat for retaining the artificial teeth, and the materials used. For example, the handling rod can be formed in one piece with the body of the positioner, instead of being a metal element as in the illustrated example.

## Claims

1. A device for positioning artificial teeth, comprising a plurality of seats for temporarily retaining corresponding artificial teeth to be positioned and mounted on prosthetic supports, **characterized in that** the seats are arranged in two substantially parallel adjacent rows (12, 13), namely a lower row (12) and an upper row (13), for retaining corresponding artificial teeth (14, 15) in a relationship of maximum intercuspidation, in order to enable the teeth of the lower row to be positioned and mounted in this condition on a mandibular prosthetic support, and to enable the teeth of the upper row to be positioned and mounted in this condition on a maxillary prosthetic support.

2. A positioning device according to Claim 1, **characterized in that** the seats (12, 13) are formed in order to retain the teeth by their vestibular side.

3. A positioning device according to Claim 2, **characterized in that** each seat (12, 13) is shaped so as to match part of the impression of the vestibular face of an artificial tooth.

4. A positioning device according to Claim 3, **characterized in that** each seat (12, 13) is also shaped so that it additionally matches a lateral part of an occlusal face of an artificial tooth.

5. A positioning device according to Claim 1, **characterized in that** it comprises a body made from plastics material (11) which forms the seats (12, 13).

6. A positioning device according to Claim 1, **characterized in that** it also comprises a projecting handling means (18).

7. A positioning device according to Claim 6, **characterized in that** the projecting handling means (18) extends in a direction substantially parallel to the rows of seats (12, 13).

8. A positioning device according to Claim 6, **characterized in that** the handling means (18) is positioned closer to the seats (12) for the mandibular teeth than to the seats (13) for the maxillary teeth.

9. A positioning device according to Claim 1, **characterized in that** the seats (12, 13) are designed in such a way that they do not cover the whole of the vestibular faces of the artificial teeth fitted in them, but leave portions of the necks uncovered.
